# EUROPÄISCHE PATENTSCHRIFT

(11) **EP 2 904 219 B1**
(45) Veröffentlichungstag und Bekanntmachung des Hinweises auf die Patenterteilung: **16.09.2020**
(21) Anmeldenummer: 13773681.5
(22) Anmeldetag: 01.10.2013
(51) Int. Cl.: F01D 25/28

(54) **HILFSVORRICHTUNG**
AUXILIARY DEVICE
DISPOSITIF AUXILIAIRE

(30) Priorität: 30.10.2012 EP 12190629
(43) Veröffentlichungstag der Anmeldung: 12.08.2015
(73) Patentinhaber: Siemens Aktiengesellschaft, 80333 München (DE)
(72) Erfinder: KARTHEUSER, Frank, 04931 Mühlberg/Elbe (DE); KLAVE, Jean, 10589 Berlin (DE); KRABIELL, Kay, 16562 Hohen Neuendorf (DE)
(86) Internationale Anmeldenummer: PCT/EP2013/070430
(87) Internationale Veröffentlichungsnummer: WO 2014/067736

(56) Entgegenhaltungen:
- EP-A1- 2 107 219
- EP-A2- 2 500 529
- EP-A2- 2 535 530
- WO-A1-2005/054631
- DE-A1-102009 003 833
- US-A1- 2010 263 183

## Beschreibung

Die Erfindung betrifft eine Hilfsvorrichtung zur Montage und/oder Demontage eines Führungsringsegments, welches an einem Träger, insbesondere einem Turbinenleitschaufelträger einer Gasturbine, in an diesem ausgebildeten Nuten anzubringen oder gehalten ist und Verhakungen aufweist, mit einem Grundkörper, an dem eine Verriegelungseinheit zum lösbaren Befestigen des Grundkörpers an dem Führungsringsegment vorgesehen ist, und eine Halteeinrichtung, welche an dem Grundkörper lösbar befestigt oder befestigbar ist und an welcher ein Zugmittel lösbar befestigt oder befestigbar ist, wobei die Halteeinrichtung ausgebildet ist, eine über das Zugmittel in einer Einbaurichtung oder Austreibrichtung des Führungsringsegmentes einwirkende Zugkraft auf den Grundkörper zu übertragen, und wobei die Verrieglungseinheit in Einbaurichtung oder Austreibrichtung gesehen an einer vorderen Stirnseite des Grundkörpers angeordnet ist und zwei Backen aufweist, welcher zwischen einer inneren und einer äußeren Stellung hin und her bewegbar sind.

Im Rahmen der Triebwerksinstandsetzung werden die Instand zu setzenden Triebwerke in ihre einzelnen Komponenten zerlegt. Aufgrund der im Betrieb des Triebwerkes herrschenden hohen Temperaturen verziehen sich die auszubauenden Komponenten häufig so sehr, dass sie nur mit einem hohen Kraftaufwand voneinander getrennt werden können. Vor allem Führungsringsegmente im Turbinenmodul des Triebwerkes werden im Betrieb des Triebwerkes starken Temperaturschwankungen ausgesetzt.

Um die in Umfangsrichtung des Turbinenleitschaufelträgers hintereinander angeordneten Führungsringsegmente aus dem Träger auszutreiben, werden die Turbinenleitschaufelträger zunächst in ihre zwei halbschalenartigen Elemente zerlegt. Anschließend werden die in Nuten eingesetzten Führungsringsegmente mit Hammer, Keil und Kunststoffklötzen aus dem Turbinenleitschaufelträger ausgetrieben. Dazu muss zunächst zwischen zwei benachbarte Führungsringsegmente ein Keil eingeschlagen werden. Anschließend wird mithilfe des Hammers seitlich auf den Keil gehämmert, um einen der Führungsringsegmente von dem benachbarten Führungsringsegment zu beabstanden. Sobald genügend Platz zwischen den zwei Führungsringsegmenten besteht, wird ein Kunststoffklotz eingesetzt und das Führungsringsegment durch Hammerschläge auf den Kunststoffklotz aus der Nut des Trägers ausgetrieben.

Zur Montage der Führungsringsegmente werden ebenso Hammer und Kunststoffklötze verwendet, um die Führungsringsegmente in die Nuten der Turbinenleitschaufelträger einzutreiben.

Nachteilig an dieser Vorgehensweise ist, dass die händische Montage und Demontage ein erhöhtes Verletzungsrisiko für den Arbeiter mit sich bringt. Zudem können die Führungsringsegmente trotz Einsatz der Kunststoffklötze durch das Hämmern beschädigt werden. Außerdem ist der Montage- und Demontagevorgang aufwendig und zeitintensiv.

Als Abhilfe wird in der EP 2 535 530 A2 eine Hilfsvorrichtung zum Bewegen eines in umlaufende Nuten des Trägers einer Turbine eingesetzten Führungsringsegments vorgeschlagen, welche einen Grundkörper, der lösbar an dem Bauteil befestigbar ist, und ein an diesem befestigtes Zugmittel umfasst, um über einen Kran eine Zugkraft auf das Bauteil aufbringen zu können.

In der DE 10 2009 003 833 A1 wird ein System zur Demontage einer Rotationsmaschine, inbesondere einer Gasturbine, welche ein Gehäuse und mehrere darin ausgebildete bogenförmige Kanäle enthält, offenbart. Dieses umfasst eine Hilfsvorrichtung mit einem Grundkörper, der lösbar mit einem in die Kanäle eingesetzten Bauteil verbunden oder verbindbar ist. Ferner ist eine Halteeinrichtung vorgesehen, an welcher ein Zugmittel angebracht werden kann, um ein zu demontierendes Bauteil aus den bogenförmigen Kanälen des Gehäuses zu entfernen.

Aus der US 2010/0263183 A1 ist eine Vorrichtung zum Demontieren von in umlaufende Nuten, welche in einem Träger einer Turbine ausgebildet sind, eingesetzten Bauteilen vorbekannt. Diese Vorrichtung umfasst einen Grundkörper, an dem eine Verriegelungseinheit angebracht ist, um an dem zu demontierenden Bauteil lösbar befestigt zu werden. Konkret besitzt die Verriegelungseinheit zwei Backen, welche derart ausgebildet sind, dass sie das Tragflächenprofil außenseitig umgreifen, um eine Zugkraft zur Demontage auf dieses aufbringen zu können.

Die WO 2005/054631 A1 offenbart eine Vorrichtung, die geeignet ist, eine schlagartige Kraft auf eine in eine Führungsnut eines Trägers eingesetzte Turbinenschaufel aufzubringen. Dazu ist vorgesehen, eine in dieser Vorrichtung ausgebildete Nut in einem korrespondierenden Vorsprung an der Turbinenschaufel in Eingriff zu bringen und senkrecht zur Nutrichtung eine schlagartige Kraft aufzubringen, in dem ein Gewicht gegen einen Anschlag gehämmert wird.

Wenngleich sich die vorbekannten Hilfsvorrichtungen grundsätzlich zur Montage und/oder Demontage eines Führungsringsegments durchaus bewährt haben, so kann zu teilen als nachteilig angesehen werden, dass die Befestigung der Hilfsvorrichtung an dem Führungsringsegment aufwendig und/oder undefiniert erfolgt. Dadurch besteht das Risiko, dass das ein- bzw. auszubauende Führungsringsegment während des Arbeitsvorgangs beschädigt werden kann.

Ausgehend von diesem Stand der Technik ist es eine Aufgabe der vorliegenden Erfindung, eine Hilfsvorrichtung der eingangs genannten Art bereit zu stellen, bei der eine definierte Befestigung an dem Führungsringsegment möglich ist und das Risiko einer Beschädigung verringert wird.

Diese Aufgabe ist bei einer Hilfsvorrichtung der eingangs genannten Art dadurch gelöst, dass die Backen an ihren voneinander wegweisenden Außenseiten Aussparungen aufweisen, um in ihrer äußeren Stellung mit den an den Führungsringsegment ausgebildeten Verhakungen in Eingriff zu kommen.

Somit liegt der Erfindung die Überlegung zugrunde, den Grundkörper der Hilfsvorrichtung über die Verrieglungseinheit an dem Führungsringsegment lösbar so zu befestigen, dass die an dem Führungsringsegment ausgebildeten Verhakungen genutzt werden, um die Backen an diesem in Eingriff zu bringen. Diese Anordnung macht sich die an der Unterseite des Führungsringsegments vorhandenen Verhakungen zu Nutze, über welche die Führungsringsegmente in Nuten des Trägers geführt und gehalten sind. Die Verriegelungseinheit gewährt auf diese Weise eine formschlüssige, zugfeste und lösbare Verbindung. Außerdem ist vorteilhaft, dass die auseinandergespreizten Backen in ihrer äußeren Stellung flächig an nach unten abstehende Verhakungsflanken des Führungsringsegments gedrückt werden können. Dadurch wird die Stabilität der Verbindung zwischen der Hilfsvorrichtung und dem Führungsringsegment weiter verbessert und ein Wegdrehen des Grundkörpers von dem Führungsringsegment wird vermieden.

Führungsringsegmente weisen keine eigenen Angriffspunkte auf, um Zugmittel direkt ansetzen zu können. Somit sieht die Erfindung eine Hilfsvorrichtung vor, die an dem Führungsringsegment befestigt werden kann und ihrerseits eine Halteeinrichtung aufweist, an welcher das Zugmittel angebracht werden kann. Auf diese Weise kann das Zugmittel über die Hilfsvorrichtung indirekt an dem Führungsringsegment angreifen. Die Zugkraft sollte dabei in Einbau- bzw. Ausbaurichtung des Führungsringsegments auf die Hilfsvorrichtung wirken, um ein Verkanten des Führungsringsegments bei seiner Montage bzw. Demontage zu vermeiden. Vorteilhaft ist, dass die Hilfsvorrichtung sowohl für die Montage, als auch für die Demontage des Führungsringsegments verwendet werden kann.

Dabei ist eine Verriegelungseinheit an dem Grundkörper vorgesehen, insbesondere lösbar befestigt, welche ausgebildet ist, den Grundkörper lösbar an dem Führungsringsegment zu befestigen. Zweckmäßigerweise ist die Verriegelungseinheit in Einbaurichtung oder Austreibrichtung gesehen an einer vorderen Stirnseite des Grundkörpers angeordnet und ausgebildet, das Führungsringsegment zumindest in einem verriegelten Zustand zu untergreifen und/oder hintergreifen. Bei der Demontage der Führungsringsegmente werden die hintereinander angeordneten Führungsringsegmente aus dem Träger oder dem halbschalenartigen Turbinenleitschaufelträger der Reihe nach von einer Seite beginnend ausgebaut. Durch diese Vorgehensweise ist das Führungsringsegment an seiner vorderen Stirnseite frei zugänglich und stößt an seiner hinteren Stirnseite an das nachfolgende Führungsringsegment. Somit ist eine an der vorderen Stirnseite des Grundkörpers vorgesehene Verriegelungseinheit besonders einfach montierbar. Zudem kann die Hilfsvorrichtung durch die lösbare Anordnung der Verriegelungseinheit an dem Grundkörper auf einfache Weise seitengerüstet werden. Das heißt, dass zwei Verriegelungseinheiten vorgesehen sein können, wobei eine für eine linke und eine weitere für eine rechte Anordnung an dem Grundkörper geeignet ist, um entsprechend der gewünschten Einbau- bzw. Austreibrichtung des Führungsringsegments die Hilfsvorrichtung seitenzurüsten.

Um die Verriegelungseinheit von außen betätigen zu können, weist die Verriegelungseinheit einen Hebelmechanismus auf, welcher ausgebildet ist, die Backen zwischen der inneren und der äußeren Stellung hin und her zu bewegen, und insbesondere ein Arretierungsmittel vorgesehen ist, um den Hebelmechanismus zumindest in einem verriegelten Zustand der Verriegelungseinheit zu arretieren. Beispielsweise kann ein von außen bedienbarer Hebel vorgesehen sein, welcher beim Betätigen ein keilartiges Element zwischen die beiden Backen drückt, um diese aus ihrer inneren in eine äußere Stellung zu bewegen.

Vorteilhafterweise ist die Halteeinrichtung an der Verriegelungseinheit vorgesehen, insbesondere lösbar befestigt. Ferner kann die Halteeinrichtung eine Anschlagöse aufweisen. Somit kann das Zugmittel auf einfache Weise an der Hilfsvorrichtung angebracht werden.

Weiterhin kann an einer Unterseite des Grundkörpers eine Anlagefläche ausgebildet sein, welche mit dem Führungsringsegment zumindest bereichsweise flächig in Kontakt gebracht werden kann. Dadurch ist die Hilfsvorrichtung gut handhabbar, da zur Stabilisierung der Hilfsvorrichtung der Grundkörper per Hand oder mittels weiterer Hilfsmittel gegen das Führungsringsegment gedrückt werden kann. Zur Vergrößerung der mit dem Führungsringsegment in Kontakt stehenden Anlagefläche kann diese eine zu dem Führungsringsegment korrespondierende Außenwölbung aufweisen.

Um die Hilfsvorrichtung besonders gut an den länglichen Führungsringsegmenten anbringen zu können, kann der Grundkörper eine längliche Grundform aufweisen.

In Weiterbildung der vorliegenden Erfindung kann der Grundkörper wenigstens ein grundkörperfestes Anschlagselement aufweisen, insbesondere welches an einer der Halteeinrichtung gegenüberliegenden Stirnseite des Grundkörpers ausgebildet ist. Somit kann beispielsweise ein Hammer als Schlagkörper eingesetzt werden, um das mit der Hilfsvorrichtung verbundene Führungsringsegment auszutreiben bzw. einzusetzen, ohne dass ein direkter Kontakt zwischen dem Hammer und dem Führungsringsegment stattfindet. Auf diese Weise wird das Führungsringsegment nicht beschädigt.

Gemäß einem weiteren Aspekt der vorliegenden Erfindung weist der Grundkörper eine L-förmige Grundform auf, wobei ein Schenkel des L-förmigen Grundkörpers ein grundkörperfestes Anschlagelement bildet. Beispielsweise kann der Schenkel an einem der Halteeinrichtung gegenüberliegenden Ende des Grundkörpers ausgebildet sein, um eine große Anschlagfläche für einen Hammer bereitzustellen.

In weiterer Ausgestaltung ist ein Schlagkörper vorgesehen, welcher an dem Grundkörper zumindest im Wesentlichen entlang der Einbau- oder Austreibrichtung des Führungsringsegments hin und her bewegbar geführt ist, wobei eine Endposition des Schlagkörpers durch das Anschlagelement definiert ist. Auf diese Weise kann ein geführter Schlagkörper derart mit dem Führungsringsegment in Verbindung gebracht, dass ein Impuls des Schlagkörpers auf das Führungsringsegment übertragen wird, um das Führungsringsegment aus einem Träger auszutreiben oder in diesen einzusetzen. Dabei ist der Schlagkörper zumindest im Wesentlichen entlang der Einbau- bzw. Austreibrichtung des Führungsringsegmentes hin und her bewegbar, um eine Verhakung des Führungsringsegments zu vermeiden. Konkret wird der in Austreibrichtung wirkende Impuls des Schlagkörpers zunächst auf den Grundkörper übertragen, indem der Schlagkörper manuell aus seiner zurückgeführten Position kraftvoll in seine Endposition nach vorne bewegt und gegen das grundkörperfeste Anschlagelement geschlagen wird. Der auf den Grundkörper übertragene Impuls wird an das an dem Grundkörper befestigte Führungsringsegment weitergegeben. Anschließend wird der Schlagkörper manuell wieder zurückgeführt und erneut gegen das Anschlagelement geschlagen. Auf diese Art und Weise wird das an dem Träger gehaltene Führungsringsegment aus dem Träger ausgetrieben bzw. eingesetzt. Durch Erhöhung des Schlaggewichts und/oder Vergrößerung des Ausholweges und/oder Erhöhung der Beschleunigung des Schlagkörpers kann der Impuls des Schlaggewichts auf das Führungsringsegment entsprechend vergrößert werden. Entsprechend, wenn eine Verringerung des Impulses gewünscht ist, kann das Schlaggewicht und/oder der Ausholweg und/oder die Beschleunigung des Schlagkörpers verringert werden.

Weiterhin kann der Grundkörper eine U-förmige Grundform aufweisen. Dabei kann zwischen den beiden U-Schenkeln ein die beiden Schenkel verbindender Führungssteg vorgesehen sein, an welchem der Schlagkörper geführt ist. Vorteilhaft ist, dass der Schlagkörper zwischen den beiden Schenkeln gut von außen zugänglich ist, um den Schlagkörper hin und her bewegen und vor allem kräftig gegen das Anschlagelement schlagen zu können. Zudem ist diese Ausführungsform sehr stabil, da der Führungssteg beidseitig gehalten ist, so dass auch verhältnismäßig schwere Schlagkörper verwendet werden können.

Zweckmäßigerweise bildet der in Einbau- bzw. Austreibrichtung vorne angeordnete Schenkel das Anschlagelement und/oder der hinten angeordnete Schenkel definiert eine Ausholposition. Somit kann die Hilfsvorrichtung sowohl zum Demontieren als auch zum Montieren des Führungsringsegments in Austreib- bzw. Einbaurichtung verwendet werden, da jeder der beiden Schenkel als Anschlagelement dienen kann.

In bevorzugter Weise ist eine Führungseinheit an dem Grundkörper vorgesehen, insbesondere lösbar befestigt, welche ausgebildet ist, um den Grundkörper während der Montage oder Demontage des Führungsringsegments in seiner Lage relativ zu dem Führungsringsegment zu führen. Durch die Führungseinheit wird die Hilfsvorrichtung in ihrer Lage relativ zu dem Führungsringsegment gehalten. Vorteilhaft ist, dass dadurch auch verhältnismäßig schwere Hilfsvorrichtungen einfach handzuhaben sind. Ohne die Führungseinheit müsste die Hilfsvorrichtung je nach Lage des Trägers mit einem hohen Kraftaufwand manuell an dem Führungsringsegment gehalten werden. Somit kann die Hilfsvorrichtung auf einfache Weise auch an einem auf der Seite liegenden Träger verwendet werden. Durch die lösbare Anordnung der Führungseinheit an der Hilfsvorrichtung ist die Hilfsvorrichtung wartungsfreundlich. Zudem können von der Austreib- bzw. Einbaurichtung des Führungsringsegment abweichende, auf den Grundkörper wirkende Kräfte von der Führungseinheit aufgenommen und von dem Führungsringsegment ferngehalten werden.

Um eine besonders sichere und einfach handhabbare Führung der Hilfsvorrichtung bereitzustellen, kann die Führungseinheit wenigstens eine an dem Grundkörper gehaltene Führungsschiene aufweisen, welche ausgebildet ist, um in eine parallel zu dem zu montierenden oder demontierenden Führungsringsegment verlaufende Nut des Trägers einzugreifen und in dieser bewegbar geführt zu werden.

Damit die Führungseinheit besonders leichtgängig in der parallel zu dem auszubauenden Führungsringsegment verlaufenden Nut bewegbar ist, kann die Führungsschiene an ihrem mit zu der Nut weisenden Endbereich Rollen tragen, insbesondere wobei die Führungsschiene zumindest an ihrem mit der Nut in Eingriff zu bringenden Endbereich Rollen tragen. Durch die in der Nut laufenden Rollen kann die Führungsschiene passgenau in der Nut gleiten. Beispielsweise sind weitere Rollen außerhalb der Nut an der Führungsschiene gehalten, welche auf der Trägeroberseite benachbart zu der Nut laufen, um eine zusätzliche Abstützung der Führungsschiene gegenüber dem Träger zu ermöglichen.

Weiterhin betrifft der Gegenstand der vorliegenden Erfindung ein Verfahren zum Montieren und/oder Demontieren eines Führungsringsegments, welches an einem Träger, insbesondere einem Turbinenleitschaufelträger einer Gasturbine, in an diesem ausgebildeten Nuten anzubringen oder gehalten ist und Verhakungen aufweist, bei welchem eine Hilfsvorrichtung in den am Führungsringsegment ausgebildeten Verhakungen in Eingriff gebracht wird, eine Halteeinrichtung, insbesondere eine Anschlagöse, in Einbaurichtung bzw. Austreibrichtung gesehen vorne an dem Grundkörper lösbar befestigt wird, ein Zugmittel, insbesondere ein Seilzug, mit der Halteeinrichtung, insbesondere der Anschlagöse, verbunden wird, und das Zugmittel gespannt_wird, um die Hilfsvorrichtung in Einbaurichtung bzw. Austreibrichtung zu ziehen.

Um das Zugmittel auf einfache Weise von außen an die Hilfsvorrichtung heranführen zu können, kann in Austreib- bzw. Einbaurichtung vor der Hilfsvorrichtung ein Umlenkmittel, insbesondere eine weitere Anschlagöse, an dem Träger befestigt werden, um eine von dem Zugmittel aufgebrachte Zugkraft in Einbau- bzw. Austreibrichtung umzulenken.

Weiterhin kann mit wenigstens einem Schlagkörper gegen ein grundkörperfestes Anschlagelement geschlagen werden, um mit jedem Schlag einen Impuls des Schlagkörpers über den Grundkörper auf das Führungsringsegment in Einbau- bzw. Austreibrichtung zu übertragen. Dadurch kann kurzzeitig ein Impuls auf das Führungsringsegment übertragen werden, wenn das Führungsringsegment bei der Montage bzw. Demontage beispielsweise klemmt.

Auf einfachste Weise kann ein Hammer als Schlagkörper eingesetzt werden, wobei der Schlagkörper insbesondere gegen das grundkörperfeste Anschlagselement geschlagen wird.

Gemäß einem weiteren Aspekt der vorliegenden Erfindung kann ein an dem Grundkörper entlang der Einbaurichtung bzw. Austreibrichtung geführtes Schlaggewicht eingesetzt werden, welches vor und zurück bewegt wird, wobei der Schlagkörper bei der Vorwärtsbewegung gegen das grundkörperfeste Anschlagelement geschlagen wird. Durch die Führung des Schlagkörpers wird das Verletzungsrisiko des die Hilfsvorrichtung bedienenden Arbeiters verringert.

Vorteilhafterweise wird ein an dem Grundkörper befestigtes Führungsmittel zumindest teilweise in eine parallel zu dem auszutreibenden bzw. einzubauenden Führungsringsegment verlaufende Nut des Trägers eingesetzt, um die Hilfsvorrichtung in ihrer Lage relativ zu dem Führungsringsegment zu stützen und entlang der Einbau- bzw. Austreibrichtung zu führen. Dadurch sind auch verhältnismäßig schwere Hilfsvorrichtungen leicht zu bedienen.

Hinsichtlich weiterer vorteilhafter Ausgestaltungen der Erfindung wird auf die Unteransprüche sowie auf die nachfolgende Beschreibung von einem Ausführungsbeispiel unter Bezugnahme auf die beiliegende Zeichnung verwiesen. In der Zeichnung zeigt:
- Figur 1: eine Hilfsvorrichtung gemäß einer Ausführungsform der vorliegenden Erfindung in Draufsicht;
- Figur 2: die Hilfsvorrichtung aus Figur 1 im befestigten Zustand in Draufsicht;
- Figur 3: die an einem Führungsringsegment befestigte Hilfsvorrichtung aus Figur 1 in Draufsicht; und
- Figur 4: die Hilfsvorrichtung aus Figur 1 im befestigten Zustand mit einem daran befestigten Zugmittel in vereinfachter perspektivischer Darstellung.

In der Zeichnung ist eine Hilfsvorrichtung 1 gemäß einer Ausführungsform der vorliegenden Erfindung dargestellt. Die Hilfsvorrichtung 1 dient sowohl zum Montieren als auch zum Demontieren eines Führungsringsegments 2, welches an einem Träger 3, hier einem Turbinenleitschaufelträger einer Gasturbine, gehalten ist. Im Nachfolgenden ist die Hilfsvorrichtung 1 anhand der Demontage des Führungsringsegments 2 erläutert, wobei mithilfe der Hilfsvorrichtung 1 das Führungsringsegment 2 nicht nur in Austreibrichtung X aus dem Träger 3 ausgetrieben, sondern zur Montage auch entgegengesetzt zu der Austreibrichtung X in Einbaurichtung in den Träger 3 gezogen werden kann.

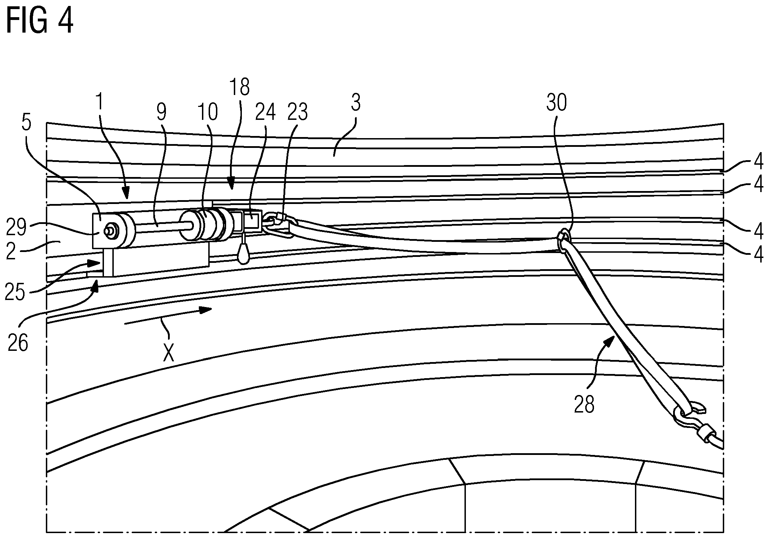

In Figur 4 ist gut erkennbar, dass der Turbinenleitschaufelträger 3 halbschalenartig ausgebildet ist und in Umfangsrichtung mehrere parallel zueinander verlaufende Nuten 4 aufweist. In den Nuten 4 sind nebeneinander mehrere nicht dargestellte Leitschaufelreihen angeordnet, wobei jeweils in einer Nut 4 zwischen zwei Leitschaufelreihen mehrere hintereinander angeordnete Führungsringsegmente 2 eingeschoben sind.

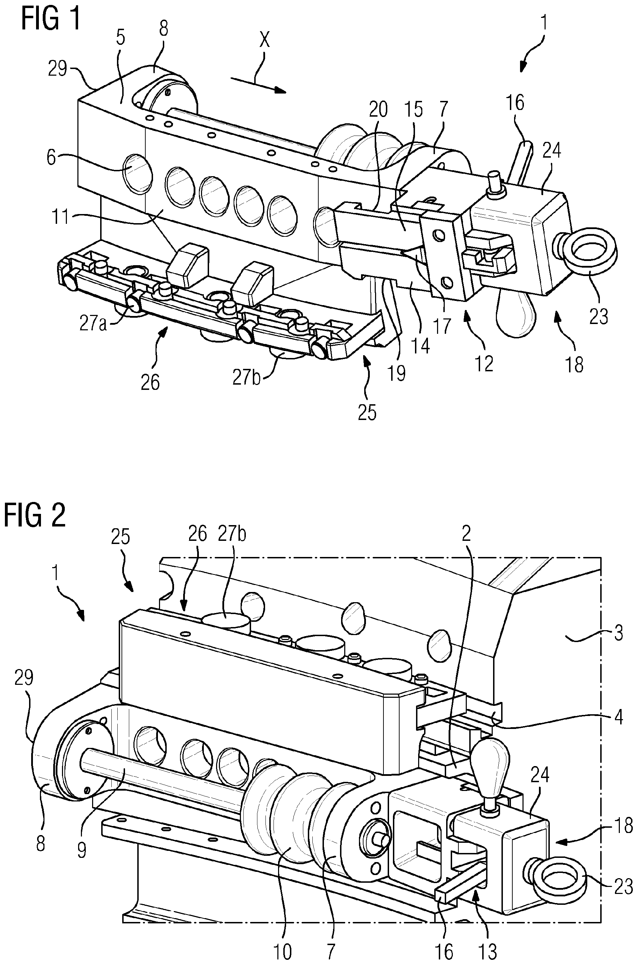

Die Hilfsvorrichtung 1 weist einen länglichen Grundkörper 5 aus einem Vollmaterial auf, welcher zur Gewichtsreduzierung eine Vielzahl von Bohrungen 6 besitzt, siehe insbesondere Figur 1. Der Grundkörper 5 ist U-förmig ausgebildet und hält zwischen seinen beiden grundkörperfesten Schenkeln 7, 8 einen Führungssteg 9. An dem Führungssteg 9 ist ein Schlagkörper 10 entlang einer mit dem Pfeil X gekennzeichneten Austreibrichtung des Führungsringsegments 2 hin und her bewegbar geführt. Der in Figur 2 rechts dargestellte Schenkel 7 ist als ein Anschlagelement ausgebildet und definiert eine Endposition des Schlagkörpers 10. Der gegenüberliegende links dargestellte Schenkel 8 begrenzt eine maximale Ausholposition für den Schlagkörper 10. Des Weiteren ist an der in Figur 2 links liegenden Stirnseite des Grundkörpers 5 außenseitig ein weiteres Anschlagelement 29 ausgebildet. An einer Unterseite des Grundkörpers 5 ist eine Anlagefläche 11 ausgebildet, welche mit dem Führungsringsegment 2 bereichsweise flächig in Kontakt gebracht werden kann.

In analoger Weise kann die Hilfsvorrichtung 1 auch für den Ausbau des Führungsringsegments 2 in einer zu der mit dem Pfeil X gezeigten Austreibrichtung entgegengesetzten Richtung zum Ausbauen des Führungsringsegments 2 verwendet werden. Dann bildet entsprechend der links dargestellte Schenkel 8 das Anschlagelement und der rechte Schenkel 7 begrenzt die maximale Ausholposition des Schlagkörpers 10.

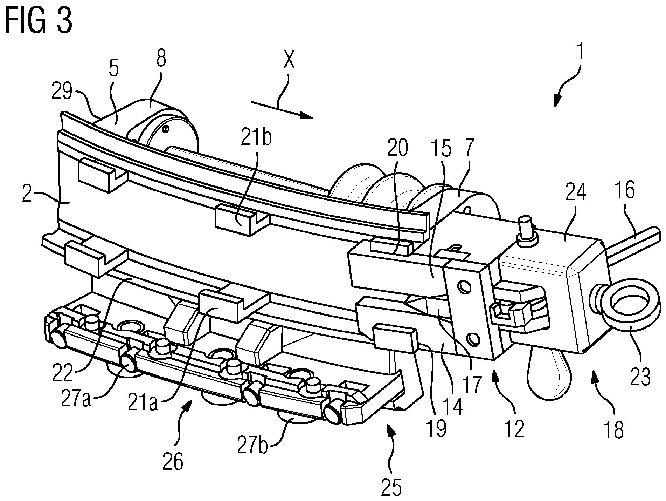

An dem Grundkörper 5 ist eine Verriegelungseinheit 12 lösbar befestigt, welche in Austreibrichtung X gesehen an einer vorderen Stirnseite des Grundkörpers 5 angeordnet ist. Konkret weist die Verriegelungseinheit 12 einen Hebelmechanismus 13 auf, welcher mit zwei das Führungsringsegment 2 untergreifenden Backen 14, 15 zusammenwirkt. Der an seinem unteren Ende gelagerte Hebel 16 ist mit einem keilartigen Dorn 17 wirkverbunden. In dem in Figur 1 dargestellten gelösten Zustand des Hebels 16, ist der Dorn 17 zurückgezogen und die Backen 14, 15 befinden sich in ihrer inneren Stellung, d.h. die Verriegelungseinheit 12 ist entriegelt. Im gezogenen Zustand des Hebels 16 wird der Dorn 17, wie in Figur 3 gut erkennbar ist, zwischen die beiden Backen 14, 15 gedrückt und spreizt diese in ihre äußere Stellung, wodurch der Grundkörper 5 an dem Führungsringsegment 2 befestigt ist. Weiterhin ist ein nicht dargestellter Arretierstift vorgesehen, welcher den Hebel 16 in seinem gezogenen Zustand arretiert.

In Figur 3 ist gut erkennbar, dass die Backen 14, 15 an ihren Außenseiten Aussparungen 19, 20 aufweisen, welche mit an dem Führungsringsegment 2 unterseitig ausgebildeten Verhakungen 21a, 21b in Eingriff kommen. Konkret sind die Verhakungen 21a, 21b L-förmig ausgebildet und symmetrisch zueinander angeordnet. Die Verhakungen 21a weisen einen von dem Führungsringsegment 2 senkrecht abragenden Schenkel auf, der länger ausgebildet ist, als der der Verhakungen 21b, d.h. die Verhakungen 21a sind höher als die Verhakungen 21b. In den Figuren 1 und 3 ist erkennbar, dass sich die Aussparung 19 über die gesamte Tiefe der Backe 14 erstreckt, um den senkrecht von dem Führungsringsegment 2 abstehenden Schenkel der Verhakungen 21a formschlüssig aufzunehmen. In dem verriegelten Zustand der Backen 14, 15, wie er in Figur 3 dargestellt ist, kommt dann der waagerechte Schenkel der Verhakungen 21a flächig mit der Unterseite der Backe 14 in Kontakt. Dagegen ist die Backe 15 lediglich bis etwa zu ihrer mittleren Tiefe ausgespart, um die kleinere Verhakung 21b formschlüssig aufzunehmen. Weiterhin kommt die auseinandergespreizte Backe 14 in ihrer äußeren Stellung mit ihrer Außenseite flächig mit einer Verhakungsflanke 22 des Führungsringsegments 2 in Kontakt.

Des Weiteren ist an der Verriegelungseinheit 12 eine Halteeinrichtung 18 mit einer Anschlagöse 23 vorgesehen. Die Anschlagöse 23 ist in ein U-förmiges Zwischenstück 24 eingeschraubt, welches an der Vorderseite der Verriegelungseinheit 12 lösbar befestigt ist.

Je nachdem, in welche Richtung das Führungsringsegment 2 ausgetrieben bzw. eingebaut werden soll, kann die Verriegelungseinheit 12 zusammen mit der Halteeinrichtung 18 an der linken oder rechten Seite der Hilfsvorrichtung 1 angebracht werden, um die Hilfsvorrichtung 1 entsprechend seitenzurüsten.

Weiterhin ist an dem Grundkörper 5 eine Führungseinheit 25 gehalten. Die Führungseinheit 25 weist eine seitlich gehaltene Führungsschiene 26 auf, welche ausgebildet ist, um in die parallel zu dem auszubauenden Führungsringsegment 2 verlaufende Nut 4 des Trägers 3 einzugreifen und in dieser bewegbar geführt zu werden. Die Führungseinheit 25 kann auch zwei gleichgroße Führungsschienen 26 aufweisen. An ihrem in die Nut 4 eingreifenden Endbereich trägt die Führungsschiene 26 Rollen 27a, welche quer zur Ausbaurichtung X an der Unterseite der Führungsschiene 26 angeordnet sind. Der Durchmesser der Rollen 27a ist annähernd so groß wie die Breite der Nut 4. Des Weiteren sind an der von dem Grundkörper wegweisenden Außenseite der Führungsschiene 26 Rollen 27b angeordnet, deren Durchmesser größer ist als der der Rollen 27a. Die Rollen 27b kommen mit der Außenseite des Trägers 3 in Kontakt, wenn die Hilfsvorrichtung 1 an dem an dem Träger 3 gehaltenen Führungsringsegment 2 befestigt ist. Durch die Rollen 27a, 27b kann die Führungseinheit 21 in dem gebogenen Träger 3 leichter bewegt werden.

In Figur 4 ist gut erkennbar, dass zum Ausbauen des Führungsringsegments 2, welches an dem Träger 3, hier einem Turbinenleitschaufelträger einer Gasturbine, gehalten ist, die an der Hilfsvorrichtung 1 gehaltene Führungsschiene 26 in die parallel zu dem Führungsringsegment 2 verlaufende Nut 4 des Trägers 3 eingesetzt wird. Anschließend wird die Hilfsvorrichtung 1 bis an das zu demontierenden Führungsringsegment 2 geführt.

Dort wird die an der Unterseite des Grundkörpers 5 vorgesehene Anlagefläche 11 mit einer von dem Träger 3 weg weisenden Außenseite des Führungsringsegments 2 in Kontakt gebracht. Danach wird der Verriegelungsmechanismus 12 durch Ziehen des Hebels 16 betätigt. Durch Betätigen des Hebels 16 wird der Dorn 17 zwischen die beiden Backen 14, 15 gedrückt und spreizt diese aus ihrer inneren Stellung in ihre äußere Stellung. Die beiden Backen 14, 15 kommen im Bereich ihrer Aussparungen 19, 20 mit den Verhakungen 21a, 21b des Führungsringsegments 2 in Eingriff. Zudem wird die Backe 14 gegen die Verhakungsflanke 22 des Führungsringsegments 2 gedrückt. Um ein ungewolltes Lösen des Hebelmechanismus 13 zu verhindern, wird der Arretierstift gedrückt, wodurch der Hebel 16 in seiner gezogenen Stellung arretiert wird.

An dem von dem Führungsringsegment 2 wegweisenden Ende der Hilfsvorrichtung 1 angeordnete Anschlagöse 23 wird nun der Seilzug 28 angeschlossen. Der Seilzug 28 ist entlang der Austreibrichtung X des Führungsringsegments 2 positioniert. Wenn, wie hier in Figur 4 gezeigt, der Platz hierzu nicht ausreicht, wird in Ausziehrichtung X vor dem Führungsringsegment 2 eine weitere Anschlagöse 30 als Umlenkmittel an dem Träger 3 angebracht, um den Seilzug 28 außerhalb der Ausziehrichtung X anordnen zu können.

Anschließend wird der Seilzug 28 gespannt und übt eine Zugkraft entlang der Ausziehrichtung X auf die Hilfsvorrichtung 1 aus. Die Zugkraft wird über den an dem Führungsringsegment 2 befestigten Grundkörper 5 auf das Führungsringsegment 2 übertragen. Sobald die Zugkraft den Reibungswiderstand zwischen dem Führungsringsegment 2 und dem Träger 3 überschreitet, wird das Führungsringsegment 2 in Ausziehrichtung X aus der Nut 4 des Trägers 3 gezogen.

Sollte sich das Führungsringsegment 2 währenddessen in der Nut 4 verhaken, kann ein Impuls bzw. können mehrere Impulse durch kräftiges Schlagen des Schlagkörpers 10 gegen den Schenkel 7 über den Grundkörper 5 auf das Führungsringsegment 2 übertragen werden. Sollte der damit maximal erreichbare Impuls, welcher durch die Masse des Schlaggewichts, die maximale Aushollänge zwischen den beiden Schenkeln 7, 8 und die maximal erzielbare Beschleunigung des Schlagkörpers 10 begrenzt wird, nicht ausreichen, kann mithilfe eines Hammers auf das Anschlagelement 29 gehämmert werden.

Die dabei auf den Grundkörper 5 einwirkenden, von der Austreibrichtung X des Führungselements 2 abweichenden Schlag- und Zugkräfte werden in der Führungseinheit 25 aufgenommen und von den mit dem Führungsringsegment 2 formschlüssig verhakten Backen 14, 15 ferngehalten, um ein auf das Führungsringsegment 2 einwirkendes Biegemoment möglichst gering zu halten.

Wenn das Führungsringsegment 2 über das Ende der Nut 4 des Turbinenleitschaufelträger 3 hinaus ausgetrieben wurde, kann es entnommen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Hilfsvorrichtung (1)
zur Montage und/oder Demontage eines Führungsringsegments (2),
welches an einem Träger (3),
insbesondere einem Turbinenleitschaufelträger einer Gasturbine,
in an diesem ausgebildeten Nuten (4) anzubringen oder gehalten ist und Verhakungen (21a, 21b) aufweist,
mit einem Grundkörper (5),
an dem eine Verrieglungseinheit (12) zum lösbaren Befestigen des Grundkörpers (5) an dem Führungsringsegment (2) vorgesehen ist, und
einer Halteeinrichtung (18), welche an dem Grundkörper (5) lösbar befestigt oder befestigbar ist und an welcher ein Zugmittel (28) lösbar befestigt oder befestigbar ist,
wobei die Halteeinrichtung (18) ausgebildet ist, eine über das Zugmittel (28) in einer Einbaurichtung oder Austreibrichtung (X) des Führungsringsegments (2) einwirkende Zugkraft auf den Grundkörper (5) zu übertragen, und
wobei die Verriegelungseinheit (12) in Einbaurichtung oder Austreibrichtung (X) gesehen an einer vorderen Stirnseite des Grundkörpers (5) angeordnet ist und zwei Backen (14, 15) aufweist, welche zwischen einer inneren und einer äußeren Stellung hin- und herbewegbar sind,
**dadurch gekennzeichnet,**
**dass** die Backen (14, 15) an ihren voneinander wegweisenden Außenseiten Aussparungen (19, 20) aufweisen, um in einer äußeren Stellung mit den an dem Führungsringsegment (2) ausgebildeten Verhakungen (21a, 21b) in Eingriff zu kommen.

2. Hilfsvorrichtung (1) nach Anspruch 1,
**dadurch gekennzeichnet, dass**
die Verriegelungseinheit (12) einen Hebelmechanismus (13) aufweist, welcher ausgebildet ist, die Backen (14, 15) zwischen einer inneren und einer äußeren Stellung hin und her zu bewegen, und insbesondere ein Arretierungsmittel vorgesehen ist, um den Hebelmechanismus (13) zumindest in einem verriegelten Zustand der Verriegelungseinheit (12) zu arretieren.

3. Hilfsvorrichtung (1) nach einem der vorherigen Ansprüche,
**dadurch gekennzeichnet, dass**
die Halteeinrichtung (18) an der Verriegelungseinheit (12) vorgesehen, insbesondere lösbar befestigt ist.

4. Hilfsvorrichtung (1) nach einem der vorherigen Ansprüche,
**dadurch gekennzeichnet, dass**
die Halteeinrichtung (18) eine Anschlagöse (23) aufweist.

5. Hilfsvorrichtung (1) nach einem der vorherigen Ansprüche,
**dadurch gekennzeichnet, dass**
an einer Unterseite des Grundkörpers (5) eine Anlagefläche (11) ausgebildet ist, welche mit dem Führungsringsegment (2) zumindest bereichsweise flächig in Kontakt gebracht werden kann.

6. Hilfsvorrichtung (1) nach einem der vorherigen Ansprüche,
**dadurch gekennzeichnet, dass**
der Grundkörper (5) eine längliche Grundform aufweist.

7. Hilfsvorrichtung (1) nach einem der vorherigen Ansprüche,
**dadurch gekennzeichnet, dass**
der Grundkörper (5) wenigstens ein grundkörperfestes Anschlagelement (29) aufweist, insbesondere welches an einer der Halteeinrichtung (23) gegenüberliegenden Stirnseite des Grundkörpers (5) ausgebildet ist.

8. Hilfsvorrichtung (1) nach einem der vorherigen Ansprüche,
**dadurch gekennzeichnet,**
**dass** der Grundkörper (5) eine L-förmige Grundform aufweist,
wobei ein Schenkel (7, 8) des L-förmigen Grundkörpers ein grundkörperfestes Anschlagelement bildet.

9. Hilfsvorrichtung (1) nach Anspruch 8,
**dadurch gekennzeichnet, dass**
ein Schlagkörper (10) vorgesehen ist, welcher an dem Grundkörper (5) zumindest im Wesentlichen entlang der Einbaurichtung oder Austreibrichtung (X) des Führungsringsegments (2) hin und her bewegbar geführt ist,
wobei eine Endposition des Schlagkörpers (10) durch das Anschlagelement (7) definiert ist.

10. Hilfsvorrichtung (1) nach einem der vorherigen Ansprüche,
**dadurch gekennzeichnet, dass**
der Grundkörper (5) eine U-förmige Grundform aufweist.

11. Hilfsvorrichtung (1) nach Anspruch 9 und 10,
**dadurch gekennzeichnet, dass**
der U-förmige Grundkörper (5) zwischen den zwei U-Schenkeln (7, 8) einen die beiden Schenkel (7, 8) verbindenden Führungssteg (9) aufweist, an welchem der Schlagkörper (10) geführt ist.

12. Hilfsvorrichtung (1) nach Anspruch 11,
**dadurch gekennzeichnet, dass**
der in Einbaurichtung bzw. Austreibrichtung (X) vorne angeordnete Schenkel (7) das Anschlagelement bildet und/oder der hinten angeordnete Schenkel (8) eine Ausholposition definiert.

13. Hilfsvorrichtung (1) nach einem der vorherigen Ansprüche,
**dadurch gekennzeichnet, dass**
eine Führungseinheit (25) an dem Grundkörper (5) vorgesehen, insbesondere lösbar befestigt ist, welche ausgebildet ist, um den Grundkörper (5) während der Montage oder Demontage des Führungsringsegments (2) in seiner Lage relativ zu dem Führungsringsegment (2) zu führen.

14. Hilfsvorrichtung (1) nach Anspruch 13,
**dadurch gekennzeichnet, dass**
die Führungseinheit (25) wenigstens eine an dem Grundkörper (5) gehaltene Führungsschiene (26) aufweist, welche ausgebildet ist, um in eine parallel zu dem zu montierenden oder demontierenden Führungsringsegment (2) verlaufende Nut (4) des Trägers (3) einzugreifen und in dieser bewegbar geführt zu werden.

15. Hilfsvorrichtung (1) nach Anspruch 14,
**dadurch gekennzeichnet, dass**
die Führungsschiene (26) an ihrem zu der Nut (4) weisenden Endbereich Rollen (27a, 27b) trägt,
insbesondere wobei die Führungsschiene (26) zumindest an ihrem mit der Nut (4) in Eingriff zu bringenden Endbereich Rollen (27a) trägt.

16. Verfahren zum Montieren und/oder Demontieren eines Führungsringsegments (2), welches an einem Träger (3), insbesondere einem Turbinenleitschaufelträger einer Gasturbine, in an diesem ausgebildeten Nuten (4) anzubringen oder gehalten ist und Verhakungen (21a, 21b) aufweist,
bei welchem eine Hilfsvorrichtung (1) nach einem der vorherigen Ansprüche in den am Führungsringsegment (2) ausgebildeten Verhakungen (21a, 21b) in Eingriff gebracht wird,
eine Halteeinrichtung (18), insbesondere eine Anschlagöse (23), in Einbaurichtung bzw. Austreibrichtung (X) gesehen vorne an dem Grundkörper (5) lösbar befestigt wird, ein Zugmittel (28), insbesondere ein Seilzug, mit der Halteeinrichtung (18), insbesondere der Anschlagöse (23), verbunden wird, und das Zugmittel (28) gespannt wird, um die Hilfsvorrichtung (1) in Einbaurichtung bzw. Austreibrichtung (X) zu ziehen.

17. Verfahren nach Anspruch 16,
**dadurch gekennzeichnet, dass**
in Einbaurichtung bzw. Austreibrichtung (X) vor der Hilfsvorrichtung (1) ein Umlenkmittel (30), insbesondere eine weitere Anschlagöse (30), an dem Träger (3) befestigt wird, um eine von dem Zugmittel (28) aufgebrachte Zugkraft in Einbaurichtung bzw. Austreibrichtung (X) umzulenken.

18. Verfahren nach Anspruch 16 oder 17,
**dadurch gekennzeichnet, dass**
mit wenigstens einem Schlagkörper (10) gegen ein grundkörperfestes Anschlagselement (7, 8, 29) geschlagen wird, um mit jedem Schlag einen Impuls des Schlagkörpers (10) über den Grundkörper (5) auf das Führungsringsegment (2) in Einbaurichtung bzw. Austreibrichtung (X) zu übertragen.

19. Verfahren nach Anspruch 18,
**dadurch gekennzeichnet, dass**
ein Hammer als Schlagkörper eingesetzt wird, wobei der Schlagkörper insbesondere gegen das grundkörperfeste Anschlagselement (29) geschlagen wird.

20. Verfahren nach Anspruch 18 oder 19,
**dadurch gekennzeichnet, dass**
ein an dem Grundkörper (5) entlang der Einbaurichtung bzw. Austreibrichtung (X) geführtes Schlaggewicht (10) eingesetzt wird, welches vor und zurück bewegt wird, wobei der Schlagkörper (10) bei der Vorwärtsbewegung gegen das grundkörperfeste Anschlagelement (7, 8) geschlagen wird.

21. Verfahren nach einem der Ansprüche 16 bis 20,
**dadurch gekennzeichnet, dass**
ein an dem Grundkörper (5) befestigtes Führungsmittel (25) zumindest teilweise in eine parallel zu dem auszutreibenden bzw. einzubauenden Führungsringsegment (2) verlaufende Nut (4) des Trägers (3) eingesetzt wird, um die Hilfsvorrichtung (1) in ihrer Lage relativ zu dem Führungsringsegment (2) zu stützen und entlang der Einbaurichtung bzw. Austreibrichtung (X) zu führen.

## Claims

1. Aid device (1)
for installing and/or removing a guide ring segment (2),
which is to be attached or mounted on a carrier (3), especially on a stator blade carrier of a gas turbine, in grooves (4) which are formed on said carrier, and which has hooks (21a, 21b),
with a base body (5),
on which provision is made for a locking unit (12) for detachably fastening the base body (5) on the guide ring segment (2), and
with a holding device (18), which is detachably fastened or can be detachably fastened on the base body (5) and on which a pulling means (28) is detachably fastened or can be detachably fastened,
wherein the holding device (18) is designed for transmitting a pulling force to the base body (5) which acts via the pulling means (28) in an installation direction or extraction direction (X) of the guide ring segment (2), and
wherein the locking unit (12) is arranged on a front end face of the base body (5), as seen in the installation direction or extraction direction (X), and has two jaws (14, 15) which can move back and forth between an inner position and an outer position,
**characterized in that**
the jaws (14, 15) have recesses (19, 20) on their outer sides pointing away from each other in order to engage in an outer position with hooks (21a, 21b) which are formed on the guide ring segment (2).

2. Aid device (1) according to Claim 1,
**characterized in that**
the locking unit (12) has a lever mechanism (13) which is designed for moving the jaws (14, 15) back and forth between an inner position and an outer position, and provision is especially made for a locking means in order to lock the lever mechanism (13) at least in a locked state of the locking unit (12) .

3. Aid device (1) according to one of the preceding claims,
**characterized in that**
the holding device (18) is provided on the locking unit (12), especially fastened in a detachable manner.

4. Aid device (1) according to one of the preceding claims,
**characterized in that**
the holding device (18) has an attachment eye (23).

5. Aid device (1) according to one of the preceding claims,
**characterized in that**
a locating face (11), which can be brought into flat contact with the guide ring segment (2), at least in certain sections, is formed on an underside of the base body (5).

6. Aid device (1) according to one of the preceding claims,
**characterized in that**
the base body (5) has an elongate basic shape.

7. Aid device (1) according to one of the preceding claims,
**characterized in that**
the base body (5) has at least one buffer element (29) fixed on the base body, especially which is formed on an end face of the base body (5) which lies opposite the holding device (23).

8. Aid device (1) according to one of the preceding claims,
**characterized in that**
the base body (5) has an L-shaped basic form, wherein one member (7, 8) of the L-shaped base body forms a buffer element fixed to said base body.

9. Aid device (1) according to Claim 8,
**characterized in that**
provision is made for an impacting body (10) which is guided in a back and forth movable manner on the base body (5) at least in the main along the installation direction or extraction direction (X) of the guide ring segment (2),
wherein an end position of the impacting body (10) is defined by the buffer element (7).

10. Aid device (1) according to one of the preceding claims,
**characterized in that**
the base body (5) has a U-shaped basic form.

11. Aid device (1) according to Claims 9 and 10,
**characterized in that**
the U-shaped base body (5) between the two U-members (7, 8) has a guide bar (9) connecting the two members (7, 8), on which the impacting body (10) is guided.

12. Aid device (1) according to Claim 11,
**characterized in that**
the member (7) which is arranged at the front in the installation direction or extraction direction (X) forms the buffer element and/or the member (8) which is arranged at the rear defines a pull-back position.

13. Aid device (1) according to one of the preceding claims,
**characterized in that**
provision is made on the base body (5) for a guide unit (25), especially fastened in a detachable manner, which is designed in order to guide the base body (5) in its position relative to the guide ring segment (2) during the installation or removal of said guide ring segment (2).

14. Aid device (1) according to Claim 13,
**characterized in that**
the guide unit (25) has at least one guide rail (26) which is mounted on the base body (5) and designed in order to engage in a groove (4) of the carrier (3), extending parallel to the guide ring segment (2) which is to be installed or removed, and to be movably guided in this groove.

15. Aid device (1) according to Claim 14,
**characterized in that**
the guide rail (26) carries rollers (27a, 27b) on its end section pointing towards the groove (4),
especially wherein the guide rail (26) carries rollers (27a) at least on its end section which is to be brought into engagement with the groove (4).

16. Method for installing and/or removing a guide ring segment (2) which is to be attached or mounted on a carrier (3), especially on a stator blade carrier of a gas turbine, in grooves (4) which are formed on said carrier, and which has hooks (21a, 21b),
in which method an aid device (1) according to one of the preceding claims is brought into engagement in the hooks (21a, 21b) which are formed on the guide ring segment (2),
a holding device (18), especially an attachment eye (23), is detachably fastened on the base body (5) at the front, as seen in the installation direction or extraction direction (X), a pulling means (28), especially a cable, is connected to the holding device (18), especially to the attachment eye (23), and the pulling means (28) is tensioned in order to pull the aid device (1) in the installation direction or extraction direction (X).

17. Method according to Claim 16,
**characterized in that**
a deflection means (30), especially an additional attachment eye (30), is fastened on the carrier (3) at the front of the aid device (1) in the installation direction or extraction direction (X) in order to deflect a pulling force applied by the pulling means (28) in the installation direction or extraction direction (X).

18. Method according to Claim 16 or 17,
**characterized in that**
by means of at least one impacting body (10) an impact is directed against a buffer element (7, 8, 29) fixed on the base body in order to transmit with each blow an impulse of the impacting body (10) via the base body (5) to the guide ring segment (2) in the installation direction or extraction direction (X).

19. Method according to Claim 18,
**characterized in that**
a hammer is used as the impacting body, wherein the impacting body is especially impacted against the buffer element (29) fixed on the base body.

20. Method according to Claim 18 or 19,
**characterized in that**
an impacting weight (10) which is guided along the installation direction or extraction direction (X) and is moved forwards and backwards is installed on the base body (5), wherein the impacting body (10) during the forward movement is impacted against the buffer element (7, 8) fixed on the base body.

21. Method according to one of Claims 16 to 20,
**characterized in that**
a guide means (25) fastened on the base body (5) is at least partially inserted into a groove (4) of the carrier (3), extending parallel to the guide ring segment (2) which is to be extracted or installed, in order to support the aid device (1) in its position relative to the guide ring segment (2) and to guide said device along the installation direction or extraction direction (X).

## Revendications

1. Système (1) auxiliaire
de montage et/ou de démontage d'un segment (2) d'anneau de guidage,
qui peut être monté ou maintenu sur un support (3), notamment un support d'aube directrice d'une turbine à gaz dans des rainures (4), qui y sont constituées, et qui a des accrochages (21a, 21b),
comprenant un corps (5) de base,
sur lequel est prévue une unité (12) de verrouillage pour la fixation amovible du corps (5) de base au segment (2) d'anneau de guidage, et
un dispositif (18) de maintien, qui est fixé de manière amovible au corps (5) de base ou qui peut l'être et auquel est fixé, de manière amovible ou peut l'être, un moyen (28) de traction,
dans lequel le dispositif (18) de maintien est constitué pour transmettre au corps (5) de base une force de traction s'appliquant par l'intermédiaire du moyen (18) de traction dans un sens de montage ou dans un sens (X) d'extraction du segment (2) d'anneau de guidage, et
dans lequel l'unité (12) de verrouillage est, considéré dans le sens de montage ou dans le sens (X) d'extraction, montée sur un côté frontal avant du corps (5) de base et a deux mâchoires (14, 15), qui peuvent aller et venir entre une position intérieure et une position extérieure,
**caractérisé**
**en ce que** les mâchoires (14, 5) ont, sur leurs côtés loin l'un de l'autre, des évidements (19, 20) pour, dans une position extérieure, venir en prise avec les accrochages (21a, 21b) constitués sur le segment (2) d'anneau de guidage.

2. Système (1) auxiliaire suivant la revendication 1,
**caractérisé en ce que**
l'unité (12) de verrouillage a un mécanisme (13) à levier, constitué pour faire aller et venir les mâchoires (14, 15) entre une position intérieure et une position extérieure et il est prévu notamment un moyen de blocage pour bloquer le mécanisme (13) à levier, au moins dans un état verrouillé de l'unité (12) de verrouillage.

3. Système (1) auxiliaire suivant l'une des revendications précédentes,
**caractérisé en ce que**
le dispositif (18) de maintien est prévu sur l'unité (12) de verrouillage, en étant fixé notamment de manière amovible.

4. Système (1) auxiliaire suivant l'une des revendications précédentes,
**caractérisé en ce que**
le dispositif (18) de maintien a un œillet (23) de butée.

5. Système (1) auxiliaire suivant l'une des revendications précédentes,
**caractérisé en ce que**,
sur le côté inférieur du corps (5) de base, est constituée une surface (11) de contact, qui peut être mise en contact en nappe, au moins par endroit, avec le segment (2) d'anneau de guidage.

6. Système (1) auxiliaire suivant l'une des revendications précédentes,
**caractérisé en ce que**
le corps (5) de base a une forme de base oblongue.

7. Système (1) auxiliaire suivant l'une des revendications précédentes,
**caractérisé en ce que**
le corps (5) de base a au moins un élément (29) de butée solidaire du corps de base, qui, notamment, est constitué d'un côté frontal du corps (5) de base faisant face au dispositif (23) de maintien.

8. Système (1) auxiliaire suivant l'une des revendications précédentes,
**caractérisé en ce que**
le corps (5) de base a une forme de base en forme de L,
une branche (7, 8) du corps de base en forme de L formant l'élément de butée solidaire du corps de base.

9. Système (1) auxiliaire suivant la revendication 8,
**caractérisé en ce qu'**
il est prévu une pièce (10) de percussion, qui est guidée sur le corps (5) de base, en allant et venant au moins sensiblement suivant le sens de montage ou le sens (X) d'extraction du segment (3) d'anneau de guidage,
une position d'extrémité de la pièce (10) de percussion étant définie par l'élément (7) de butée.

10. Système (1) auxiliaire suivant l'une des revendications précédentes,
**caractérisé en ce que**
le corps (5) de base a une forme de base en forme de U.

11. Système (1) auxiliaire suivant les revendications 9 et 10,
**caractérisé en ce que**
le corps (5) de base en forme de U a, entre les deux branches (7, 8) du U, une âme (9) de guidage, qui relie les deux branches (7, 8) et sur laquelle la pièce (10) de percussion est guidée.

12. Système (1) auxiliaire suivant la revendication 11,
**caractérisé en ce que**
la branche (7), disposée en avant dans le sens de montage ou dans le sens (X) d'extraction, forme l'élément de butée et/ou la branche (8) disposée en arrière définit une position de retrait.

13. Système (1) auxiliaire suivant l'une des revendications précédentes,
**caractérisé en ce qu'**
une unité (25) de guidage est prévue sur le corps (5) de base, en étant fixée notamment de manière amovible et en étant constituée pour guider le corps (5) de base, pendant le montage ou le démontage du segment (2) d'anneau de guidage, dans sa position par rapport au segment (2) d'anneau de guidage.

14. Système (1) auxiliaire suivant la revendication 13,
**caractérisé en ce que**
l'unité (25) de guidage a au moins un rail (26) de guidage, qui est retenu sur le corps (5) de base et qui est constitué pour pénétrer dans une rainure (4) du support (3) s'étendant parallèlement au segment (2) d'anneau de guidage à monter ou à démonter et pour y être guidée avec possibilité de se déplacer.

15. Système (1) auxiliaire suivant la revendication 14,
**caractérisé en ce que**
le rail (26) de guidage porte des galets (27a, 27b) dans sa partie d'extrémité tournée vers la rainure (4),
le rail (26) de guidage portant notamment des galets (27a) au moins dans sa partie d'extrémité à mettre en prise avec la rainure (4).

16. Procédé de montage et/ou de démontage d'un segment (2) d'anneau de guidage, qui doit être monté ou retenu sur un support (3), notamment sur un support d'aube directrice d'une turbine à gaz, dans des rainures (4), qui y sont constituées, et qui a des accrochages (21a, 21b),
dans lequel on met en prise un système (1) auxiliaire suivant l'une des revendications précédentes dans les accrochages (21a, 21b) constitués sur le segment (2) d'anneau de guidage,
on fixe, de manière amovible, un dispositif (18) de maintien, notamment un œillet (23) de butée, en avant du corps (5) de base, considéré dans le sens de montage ou dans le sens (X) d'extraction, on relie un moyen (28) de traction, notamment un câble de traction, au dispositif (18) de maintien, notamment à l'œillet (23) de butée, et on tend le moyen (28) de traction pour tirer le système (1) auxiliaire dans le sens de montage ou dans le sens (X) d'extraction.

17. Procédé suivant la revendication 16,
**caractérisé en ce que**
l'on fixe sur le support (3), dans le sens de montage ou dans le sens (X) d'extraction, avant le système (1) auxiliaire, un moyen (30) de déviation, notamment un autre œillet (30) de butée, afin de dévier, dans le sens de montage ou dans le sens (X) d'extraction, une force de traction appliquée par le moyen (28) de traction.

18. Procédé suivant la revendication 16 ou 17,
**caractérisé en ce que**,
par au moins une pièce (10) de percussion, on frappe sur un élément (7, 8, 29) de butée solidaire du corps de base, pour, à chaque coup, transmettre une impulsion de la pièce (10) de percussion, par l'intermédiaire du corps (5) de base, au segment (2) d'anneau de guidage dans le sens de montage ou dans le sens (X) d'extraction.

19. Procédé suivant la revendication 18,
**caractérisé en ce que**
l'on utilise un marteau comme pièce de percussion, la pièce de percussion étant notamment percutée sur l'élément (29) de butée solidaire du corps de base.

20. Procédé suivant la revendication 18 ou 19,
**caractérisé en ce que**
l'on utilise une masselotte (10) de percussion, qui est guidée suivant le sens de montage ou le sens (X) d'extraction et qui va et vient, la pièce (10) de butée venant, lors du mouvement d'avance, frapper l'élément (7, 8) de butée solidaire du corps de base.

21. Procédé suivant l'une des revendications 16 à 20,
**caractérisé en ce que**
l'on insère un moyen (25) de guidage fixé au corps (5) de base, au moins en partie, dans une rainure (4) du support (3) s'étendant parallèlement au segment (2) d'anneau de guidage à extraire ou à monter, afin d'appuyer le système (1) auxiliaire dans sa position par rapport au segment (2) d'anneau de guidage et afin de le guider suivant le sens de montage ou le sens (X) d'extraction.
